# EUROPEAN PATENT APPLICATION

(11) **EP 3 501 926 A1**
(43) Date of publication of application: **26.06.2019**
(21) Application number: 18171092.2
(22) Date of filing: 07.05.2018
(51) Int. Cl.: B60T 13/68, B60T 13/26, B60T 13/66, B60T 15/04, B60T 7/20, B60T 13/38, B60T 13/58, B60T 15/18, B60T 15/20

(54) **BRAKE SYSTEM FOR MOTOR VEHICLES WITH REDUCED REACTION TIME**

(30) Priority: 22.12.2017 TR 201721289
(71) Applicant: Filkar Otomotiv sanayi ve Ticaret Anonim Sirketi, 42250 Konya (TR)
(72) Inventor: FIL, Hakki, 42250 Konya (TR)
(74) Representative: Sevinç, Erkan

(57) **Abstract**

The present invention relates to a brake system (20) for simultaneous braking of the trailer and the tower, comprising an air compressor (1) to be used for air vacuuming, an air relief valve (2) associated with the air compressor (1), an air tank (3) for storing pressure and air, a trailer control valve (6) used for simultaneous braking of the trailer and the tower during the braking by means of a signal received from the brake system of the towing vehicle, a trailer brake control valve (8) for braking of the towed vehicle that has a brake system, which valve is associated with a plurality of connecting lines and comprising at least one port, and a supply line (9) for supplying an air flow from the trailer brake control valve (8), and a brake line (10). The brake system (20) comprises different types of trailer control valves that are in communication with the air tank (3) and connected to the brake mechanism of the towing vehicle, and a two-way quick exhaust valve (7) that is in communication with these valves and correlates two warnings between them so as to provide them to the next receiver as a single output.

## Description

### Relevant Art of the Invention

The present invention relates to a brake system with increased safety, which reduces reaction time upon braking in motor vehicles such as trailers and towers in agricultural and forestry vehicles, commercial vehicles, and duty vehicles.

### State of the Art

In the prior art, a parking brake system is used in controlling brake systems of trailers having a pneumatic brake system in motor vehicles, particularly agricultural and forestry vehicles, commercial vehicles, and duty vehicles having an hydraulic brake system. In the current system, trailers are controlled via a warning from the hydraulic brake hubs of a double-circuit trailer brake system, i.e. with front-rear and right-left brakes. In the parking brake system, it is known that there are such structures with essential components for the system such as a piston air compressor, and a pressure regulator that controls pressure in the main tank and conditions the air. In the brake systems of the existing agricultural and forestry vehicles, when a warning for braking is received from the main braking system of the towing vehicle, the time to initiate a braking function in the towed vehicle and to access a neutral position (driving position), as required by the European Union Standards (EU 2015/68), is not sufficient to satisfy the recent regulations.

There is a need to eliminate existing problems in connection with the reaction time of pneumatic brake systems used in trailers of agricultural and forestry vehicles, commercial vehicles and duty vehicles, and to solve the drawbacks of the existing systems.

### Objects of the Invention

Primary object of the present invention is to provide a brake system ensuring that the trailer reacts within a shorter braking time as specified in the regulation when a towing vehicle brakes and can stop in a shorter time.

Another object of the present invention is to provide a brake system reducing the time to access a neutral state (driving position) of the vehicle.

Another object of the present invention is to provide a brake system with increased safety by shutting off a line supplying the tower in case the tower and the towed vehicle are disconnected.

Still another object of the present invention is to provide a brake system wherein the system reacts at a pressure value, in addition to a brake warning pressure received from the towing vehicle, thereby rendering it more reliable.

### Brief Description of the Invention

The present invention relates to a brake system for simultaneous braking of the trailer and the tower, comprising an air compressor to be used for air vacuuming, an air relief valve associated with the air compressor, an air tank for storing pressure and air, a trailer control valve used for simultaneous braking of the trailer and the tower during the braking by means of a signal received from the brake system of the towing vehicle, a trailer brake control valve for braking of the towed vehicle that has a brake system, which valve is in communication with a plurality of connecting lines and comprising at least one port, and a supply line for supplying an air flow from the trailer brake control valve, and a brake line. The brake system comprises different types of trailer control valves that are in communication with the air tank and connected to the brake mechanism of the towing vehicle, and an exhaust valve that is in communication with these valves and correlates two warnings between them so as to provide them to the next receiver as a single output.

### Brief Description of the Drawings

The brake mechanism of the present invention is illustrated in the accompanying drawings for better understanding, which drawings are merely provided to better illustrate the present invention and do not restrict the invention, wherein:
Figure 1 is a schematic drawing of a double-circuit brake system of a towing vehicle having a dual hydraulic brake hub, according to the present invention.
Figure 2 is a schematic drawing showing a driving position of the double-circuit brake system of the towing vehicle having a dual hydraulic brake hub.
Figure 3 is a schematic drawing showing a braking position of the double-circuit brake system of the towing vehicle having a dual hydraulic brake hub.
Figure 4 is a schematic drawing showing a post-braking position of the double-circuit brake system of the towing vehicle having a dual hydraulic brake hub.
Figure 5 is a schematic drawing showing a park brake position of the double-circuit brake system of the towing vehicle having a dual hydraulic brake hub.
Figure 6 is a schematic drawing showing a post-park brake position of the double-circuit brake system of the towing vehicle having a dual hydraulic brake hub.
Figure 7 is a schematic drawing showing a triple-circuit brake system of the towing vehicle having a dual hydraulic brake hub.
Figure 8 is a schematic drawing showing a driving position of the triple-circuit brake system of the towing vehicle having a dual hydraulic brake hub.
Figure 9 is a schematic drawing showing a braking position of the triple-circuit brake system of the towing vehicle having a dual hydraulic brake hub.
Figure 10 is a schematic drawing showing a post-braking position of the triple-circuit brake system of the towing vehicle having a dual hydraulic brake hub.
Figure 11 is a schematic drawing showing a park brake position of the triple-circuit brake system of the towing vehicle having a dual hydraulic brake hub.
Figure 12 is a schematic drawing showing a post-park brake position of the triple-circuit brake system of the towing vehicle having a dual hydraulic brake hub.
Figure 13 is a schematic drawing of a double-circuit brake system of the towing vehicle having a single hydraulic hub and a pneumatic actuator.
Figure 14 is a schematic drawing of a driving position of the double-circuit brake system of the towing vehicle having a single hydraulic hub and a pneumatic actuator.
Figure 15 is a schematic drawing of a braking position of the double-circuit brake system of the towing vehicle having a single hydraulic hub and a pneumatic actuator.
Figure 16 is a schematic drawing of a post-braking position of the double-circuit brake system of the towing vehicle having a single hydraulic hub and a pneumatic actuator.
Figure 17 is a schematic drawing of a park brake position of the double-circuit brake system of the towing vehicle having a single hydraulic hub and a pneumatic actuator.
Figure 18 is a schematic drawing of a post-park brake position of the double-circuit brake system of the towing vehicle having a single hydraulic hub and a pneumatic actuator.
Figure 19 is a schematic drawing of a triple-circuit brake system of the towing vehicle having a single hydraulic hub and a pneumatic actuator.
Figure 20 is a schematic drawing of a triple-circuit brake system of the towing vehicle having a single hydraulic hub and a pneumatic actuator.
Figure 21 is a schematic drawing showing a driving position of the triple-circuit brake system of the towing vehicle having a single hydraulic hub and a pneumatic actuator.
Figure 22 is a schematic drawing showing a braking position of the triple-circuit brake system of the towing vehicle having a single hydraulic hub and a pneumatic actuator.
Figure 23 is a schematic drawing showing a post-braking position of the triple-circuit brake system of the towing vehicle having a single hydraulic hub and a pneumatic actuator.
Figure 24 is a schematic drawing showing a park brake position of the triple-circuit brake system of the towing vehicle having a single hydraulic hub and a pneumatic actuator.
Figure 25 is a schematic drawing showing a post-park brake position of the double-circuit brake system of the towing vehicle having a mechanical brake mechanism.
Figure 26 is a schematic drawing showing a driving position of the double-circuit brake system of the towing vehicle having a mechanical brake mechanism.
Figure 27 is a schematic drawing showing a braking position of the double-circuit brake system of the towing vehicle having a mechanical brake mechanism.
Figure 28 is a schematic drawing showing a post-braking position of the double-circuit brake system of the towing vehicle having a mechanical brake mechanism.
Figure 29 is a schematic drawing showing a park brake position of the double-circuit brake system of the towing vehicle having a mechanical brake mechanism.
Figure 30 is a schematic drawing showing a post-park brake position of the double-circuit brake system of the towing vehicle having a mechanical brake mechanism.
Figure 31 is a schematic drawing of a triple-circuit brake system of the towing vehicle having a mechanical brake mechanism.
Figure 32 is a schematic drawing showing a driving position of the triple-circuit brake system of the towing vehicle having a mechanical brake mechanism.
Figure 33 is a schematic drawing showing a braking position of the triple-circuit brake system of the towing vehicle having a mechanical brake mechanism.
Figure 34 is a schematic drawing showing a post-braking position of the triple-circuit brake system of the towing vehicle having a mechanical brake mechanism.
Figure 35 is a schematic drawing showing a park brake position of the triple-circuit brake system of the towing vehicle having a mechanical brake mechanism.
Figure 36 is a schematic drawing showing a post-park brake position of the triple-circuit brake system of the towing vehicle having a mechanical brake mechanism.

### Detailed Description of the Invention

Description of the reference numbers is as follows:

| | | | |
|---|---|---|---|
| 1. | Air compressor | 2. | Air relief valve |
| 3. | Air tank | 4. | Pilot-actuated liquid discharge valve |
| 5. | First type of the trailer control valve | 6. | Trailer park brake control valve |
| 7. | Exhaust valve | 8. | Trailer brake control valve |
| 9. | Supply line | 10. | Service brake line |
| 11. | Single-circuit brake line | 12. | Control valve of the towed vehicle |
| 13. | Pneumatic brake warning valve | 14. | Second type of the trailer control valve |
| 15. | Third type of the trailer control valve | 16. | One-way check valve |
| 17. | Hydraulic brake hubs | 20. | Brake system |

A brake system (20) of the present invention in general comprises an air compressor (1) to be used for vacuuming of air in the atmosphere; an air relief valve (2) associated with the air compressor (1); an air tank (3) for storing pressure and air; a trailer control valve (6) used for simultaneous braking of the towed vehicle and the tower during the braking by means of a signal received from the brake system of the towing vehicle; a trailer brake control valve (8) for braking of the towed vehicle having a brake system, which valve is in communication with a plurality of connecting lines and comprising at least one port; a supply line (9) for supplying an air flow from the trailer brake control valve (8); and a service brake line (10). According to several aspects of the invention, the brake system (20) comprises a trailer brake control valve (8) for preventing a decrease in the air required for braking of the service brake line (10); a first type of the trailer control valve (5), a second type of the trailer control valve (14) or a third type of the trailer control valve (15) in communication with the air tank (3) and connected to the brake mechanism of the towing vehicle; and an exhaust valve (7) in communication with the first type of the trailer control valve (5), the second type of the trailer control valve (14) or the third type of the trailer control valve (15) and the trailer control valve (6), and correlating two warnings between them so as to provide them to the next receiver as a single output.

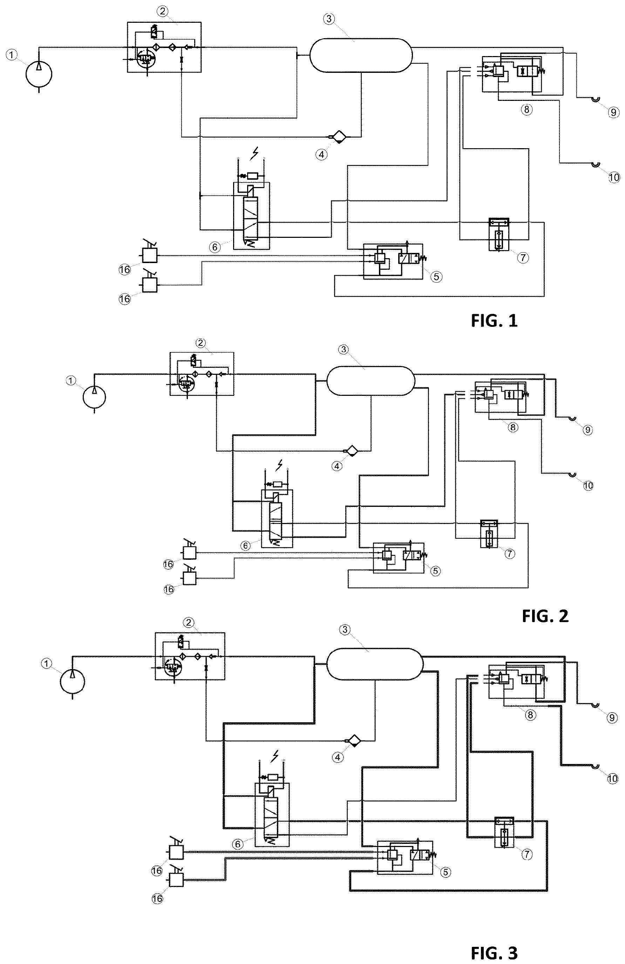

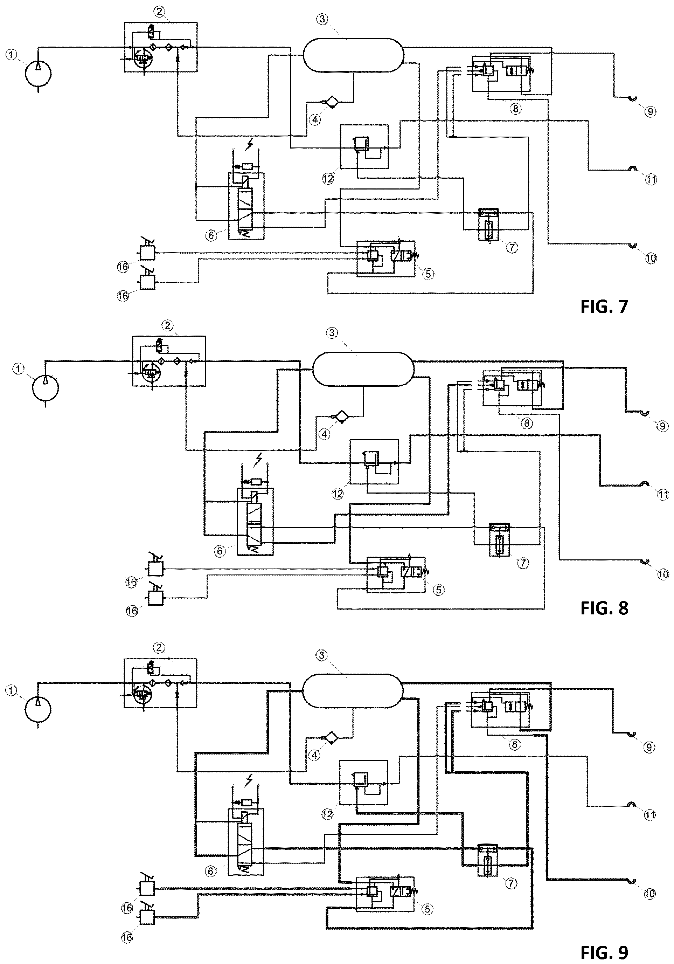

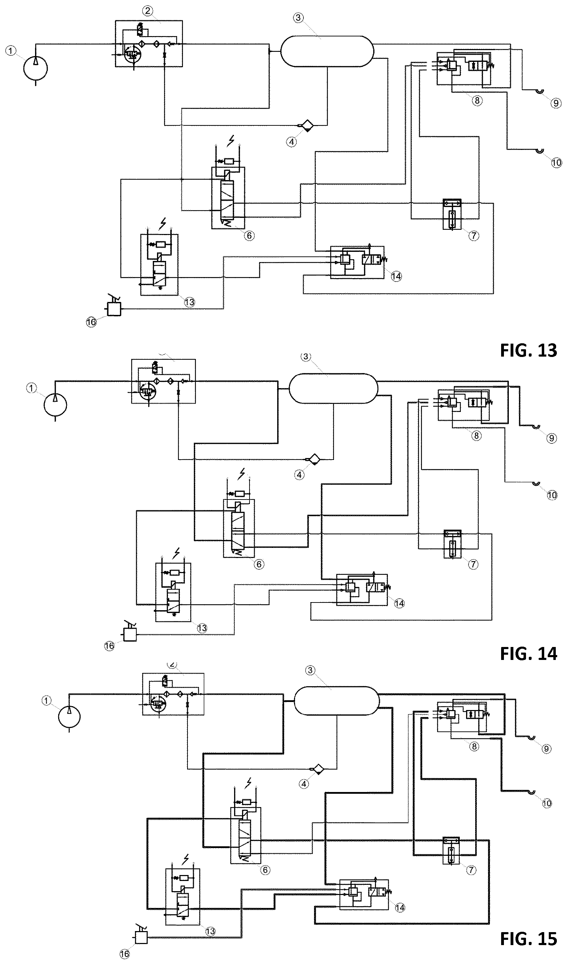

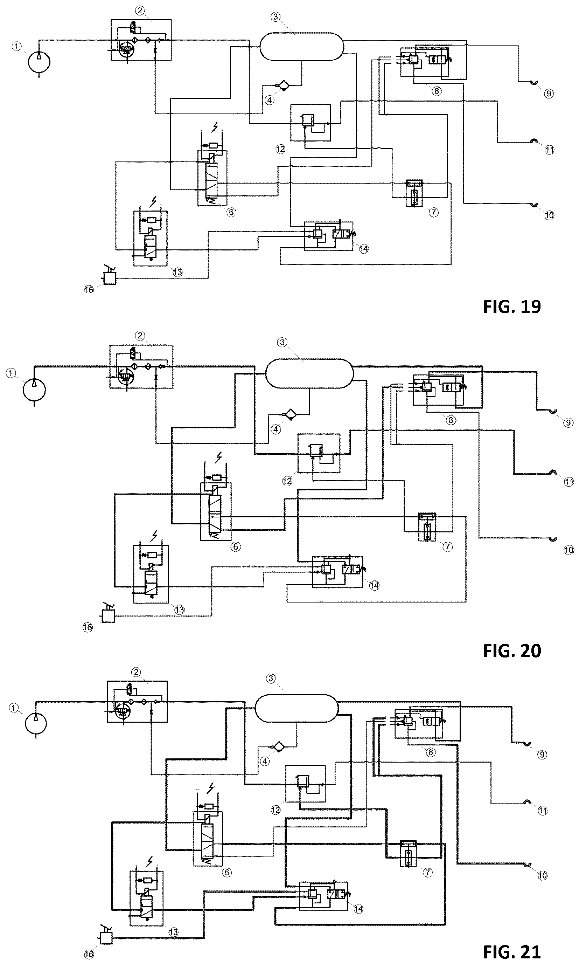

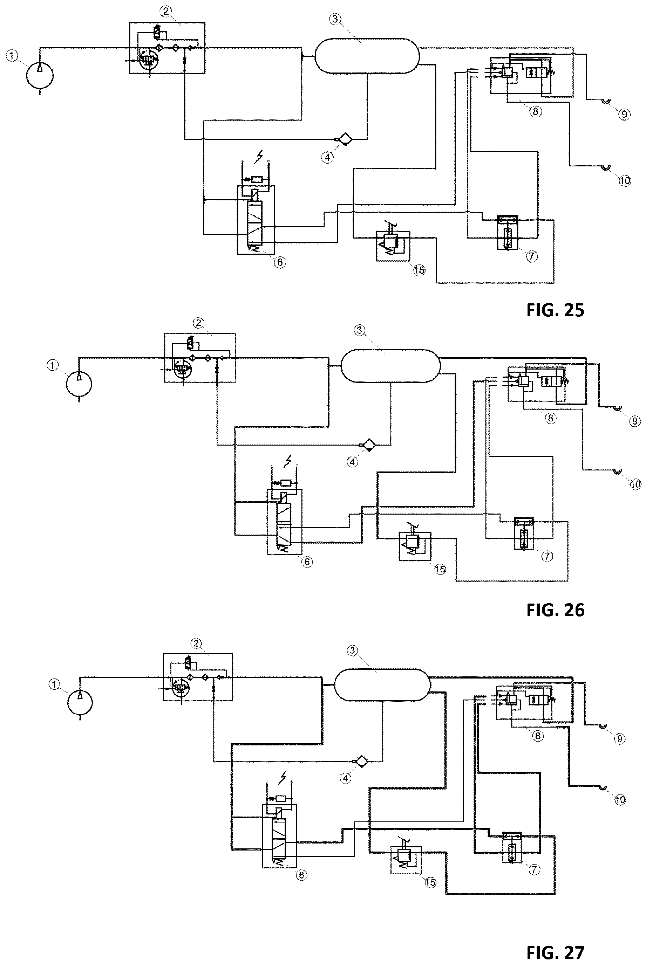

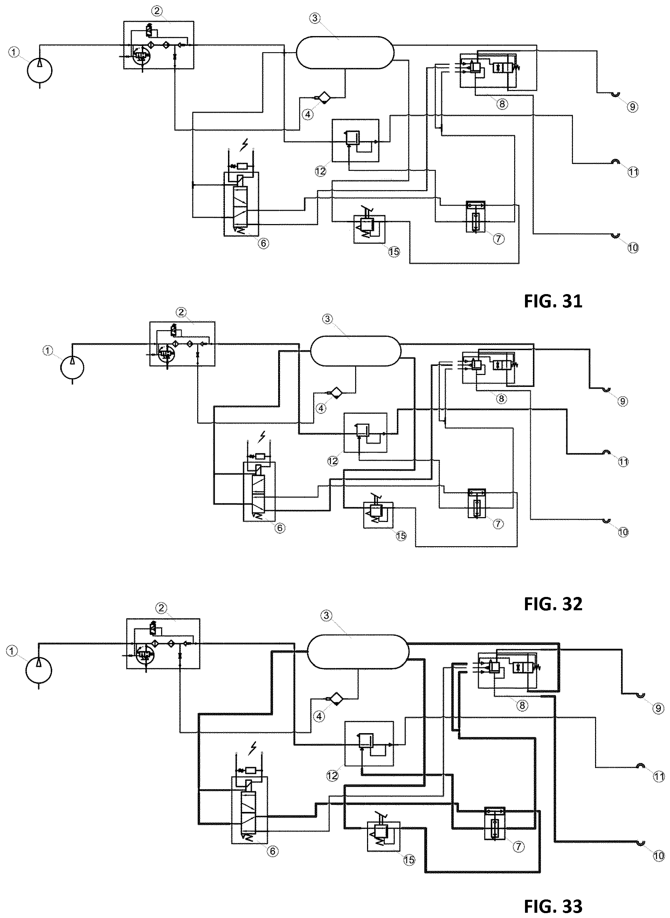

The brake system (20) of the present invention is a double-circuit brake system of the towing vehicle having a dual hydraulic brake hub, as shown in Figure 1, a triple-circuit brake system of the towing vehicle having a dual hydraulic brake hub, as shown in Figure 7, a double-circuit brake system of the towing vehicle having a single hydraulic hub and a pneumatic actuator, as shown in Figure 13, a triple-circuit brake system of the towing vehicle having a single hydraulic hub and a pneumatic actuator, as shown in Figure 19, a double-circuit brake system of the towing vehicle having a mechanical brake mechanism, as shown in Figure 25, and a triple-circuit brake system of the towing vehicle having a mechanical brake mechanism, as shown in Figure 31.

The present invention relates to a pneumatic trailer control brake system reducing reaction time for simultaneous braking of the trailer having a hydraulic and mechanical brake system in motor vehicles, especially in agricultural and forestry vehicles, commercial vehicles and duty vehicles, and of the tower. The invention has two main types of brakes, i.e. a double-circuit brake consisting of a supply line (9) and a service brake line (10), and a single-circuit brake consisting of a single-circuit brake line (11), based on the type of the brake system of the towed vehicle.

Also it has three main types of brakes, i.e. a hydraulic-hydraulic actuated, a hydraulic-pneumatic actuated, and a mechanical actuated brake, based on the type of brake hub of the towing vehicle. Assuming that the intended customer group of the towing vehicle may have a single-circuit and double-circuit trailer, the manufacturer of the towing vehicle has to manufacture it with a double-circuit or a triple-circuit including both. A single-circuit type cannot be used because of regulations.

In general, the system has a single- and double-piston air compressor (1), characterized in that air is vacuumed from the atmosphere while the piston moves from the upper dead point to the lower dead point. While the piston moves from the lower dead point to the upper dead point, it compresses the air and sends it to the pressurized airline. It is possible to use a magnetic pulley as a mechanical pulley, and hydro-motor and electric motor driving types that receive motion through a gear and cutter-driven motor.

In a preferred embodiment of the invention, the air relief valve (2) is associated with the top of the towing vehicle, which allows storage of air in the air tank at a pressure value required for the braking system and opening of the system to the atmosphere once a sufficient pressure value is achieved. Furthermore, conditioning and drying of air during a filling process ensures heating of the valve housing in an environment at a low temperature, thereby preventing freezing of the water in the brake system. In addition, it provides for a control of the external receivers of the system (i.e. a liquid discharge valve, compressor control switches). The air relief valves are classified into two groups as conditioned and non-conditioned valves. There may be two types of the conditioned air relief valves: those with a purge tank and those without a purge tank. There is an air inlet port, an air outlet port, a normally opened air outlet port, a normally closed air outlet port and an exhaust port on the air relief valve (2).

The air tank (3) of the invention stores pressure and air required for the brake system. It may be mounted on the external receivers (i.e. sleeves, a pressure relief valve) and it may be made of steel, aluminum and special engineering plastics.

With reference to the drawings, a pilot-actuated liquid discharge valve (4) is actuated by an external actuator to thereby discharge the condensed water in the air tank (3) into the atmosphere, which liquid discharge valve (4) preferably has a water inlet port and a pilot-actuated port. First type of the trailer control valve (5) receives a hydraulic warning from the hydraulic main brake hubs (17) (for the right center-left center) of the towing vehicle and modulates the air pressure available at the inlet thereof so as to convey it to the outlet port. There are two hydraulic inlets from the right and left hubs, two ventilation ports, three air inlet ports and two air outlet ports on the first type of the trailer valve (5).

The trailer park brake control valve (6) may directly or indirectly control the trailer control valve (8) by means of the air available in the inlet thereof, via a signal (mechanic, hydraulic, electric, and pneumatic) received from the park brake mechanism of the towing vehicle. The valve (6) has one air inlet port, one pilot-actuated air inlet port, one normally opened air outlet port and one normally closed air outlet port.

The exhaust valve (7) correlates two warnings between the first type of the trailer control valve (5) and the trailer park brake control valve (6) on the towing vehicle and sends it to the next receiver as a single output. In a double-circuit brake system, it controls the trailer brake control valve (8) whereas in a triple-circuit brake system it controls the trailer brake control valve (8) and the control valve (12). In a preferred embodiment of the invention, the exhaust valve (7) has two different channel feed air inlet ports, two air outlet ports and one exhaust port.

In another element of the brake system (20), i.e. the trailer brake control valve (8), a signal (mechanic, hydraulic, pneumatic, electric) from the brake mechanism on the towing vehicle is processed by the trailer control valve so as to be provided to the first and second circuit of the valve as a pneumatic signal, and the valve sends the received signal to an outlet line by processing the air available in the inlet line with the signal. As a secondary function, it processes the signal from the trailer park brake control valve (6) and sends it to the outlet line. The valve (8) preferably has one air supply line, three pilot-actuated air inlet lines, one trailer supply air outlet line, one service brake air outlet line and one exhaust port. The supply line (9) is preferably a check valve air supply coupling on the towing vehicle through which the brake system of the towed vehicle is supplied. The valve (9) has one air inlet port. The service brake line (10) is preferably a check valve air supply coupling on the towing vehicle through which the service brake line of the towed vehicle is supplied.

The single-circuit brake line (11) is preferably an air supply coupling on the towing vehicle having a single-circuit system through which a spring brake energy line of the towed vehicle is supplied. The valve (11) has one air inlet port. The control valve of the towed vehicle (12) processes a signal received from the first type of the trailer control valve (5) of the towing vehicle having a single-circuit brake system and interrupts an air supply to an outlet thereof. The control valve of the towed vehicle (12) has one supply port, one pilot-actuated port, and one exhaust port. With a signal (mechanic, hydraulic, pneumatic, and electric) from the brake mechanism of the towing vehicle, a pneumatic brake warning valve (13) sends a pneumatic warning signal to the pneumatic warning port of the second type of the trailer control valve (14). The valve (13) has one air inlet port, one air outlet port and one exhaust port.

The second type of the trailer control valve (14) receives a hydraulic warning from the hydraulic main brake hub of the towing vehicle and a pneumatic warning from the brake mechanism so as to modulate the air available in an inlet thereof, and conveys it to the outlet port. On the second type of the trailer control valve (14), there is one hydraulic inlet port originating from the hydraulic hub, one air inlet port, one pneumatic pilot-actuated inlet port originating from an external control valve, one air outlet port and one exhaust port. The third type of the trailer control valve (15) receives a mechanical warning from the brake mechanism of the towing vehicle so as to modulate the air available in an inlet thereof, and conveys it to the outlet port. The valve has one air inlet port, one air outlet port and one exhaust port. A one-way check valve (16) prevents an air discharge of the brake system in case of an emergency between the trailer brake control valve (8) and the air tank (3) on the towing vehicle. The valve (16) preferably has one air inlet port and one outlet port.

In another embodiment of the invention, a hydraulic-hydraulic actuated double-circuit trailer brake system (20) may be used. As shown in Figure 1, an air compressor (1) is connected to an inlet port of the air relief valve (2), and an outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). An air inlet port of the first type of the trailer control valve (5) is connected to an air outlet port of the air tank (3), and an air outlet port thereof is connected to an inlet port of the exhaust valve (7). Hydraulic pilot-actuated inlets of the first type of the trailer valve (5) are connected to the right-left or front-rear brake hubs of the towing vehicle. An inlet port of the trailer park brake control valve (6) is connected to an outlet port of the air tank (3) and a pilot-actuated inlet port of the valve (6) is connected to an outlet port of the air tank (3). A normally opened air outlet port of the trailer park brake control valve (6) is connected to an inlet port of the exhaust valve (7), and a normally closed air outlet port thereof is connected to a pilot-actuated park brake inlet port of the trailer brake control valve (8). An air outlet port of the exhaust valve (7) is connected to the pilot-actuated air inlet ports of the trailer brake control valve (8). A supply port of the trailer brake control valve (8) is connected to an outlet port of the air tank (3), a trailer supply air outlet port of the trailer brake control valve (8) is connected to an air inlet port of the supply line (9), a service brake air outlet port of the trailer brake control valve (8) is connected to an air inlet port of the service brake line (10).

According to the operation of the system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of the first type of the trailer control valve (5), the trailer park brake control valve (6) and the trailer brake control valve (8).

According to the operation of the system in a driving position, the trailer park brake control valve (6) is actuated when the vehicle is started or moved, as shown in figure 2. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10).

According to the operation of the system in a braking position, as shown in figure 3, when the towing vehicle brakes (only the right brake, only the left brake, only the front brake, only the rear brake or both simultaneously), a hydraulic pressure is transmitted from the brake hubs (17) to the first type of the trailer control valve (5). The first type of the trailer control valve (5) processes air available in the inlet thereof according to the signal received and sends it to the outlet port. Air in the outlet port of the first type of the trailer control valve (5) is introduced into the inlet port of the exhaust valve (7). Air in the inlet of the exhaust valve (7) is diverted and guided into the outlet of the valve. Air in the outlets of the exhaust valve (7) that is preferably used as a two-way quick valve is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time.

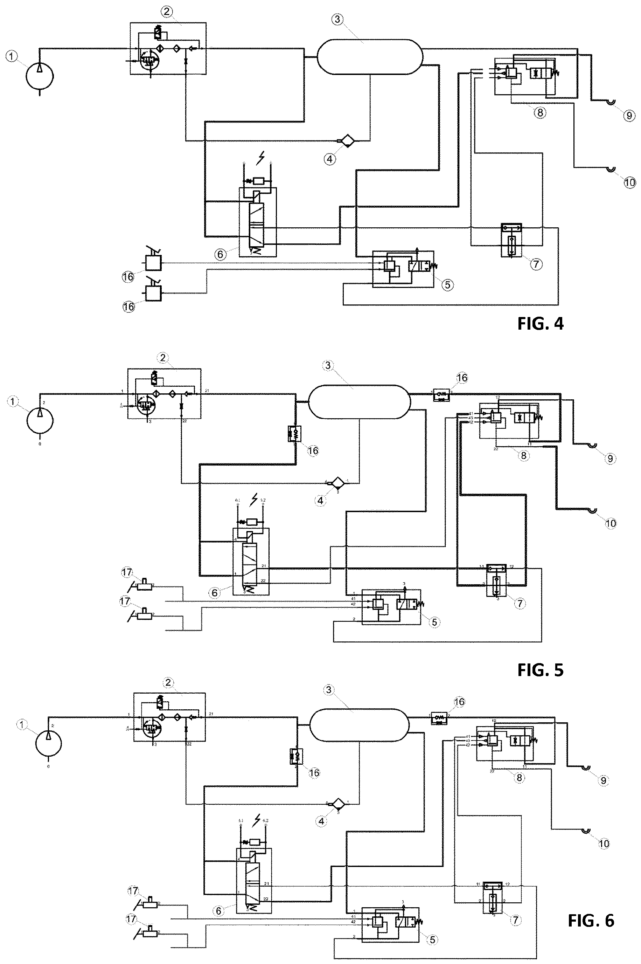

With respect to the post-braking situation, as shown in figure 4, when a hydraulic pressure in the hydraulic brake hubs of the towing vehicle is removed, the first type of the trailer control valve (5) modulates the outlet pressure in reverse direction with respect to the reduced warning pressure, and releases the residual fluidic air in the line extending to the exhaust valve (7) into the atmosphere through the exhaust port. When the warning pressure in the inlet thereof is reduced, the two-way quick exhaust valve releases air to the atmosphere in a quick manner, which air is available from its outlet up to the first type of the trailer control valve (5), in order to take the brake system of the trailer brake control valve (8) into a neutral position. The first type of the trailer control valve (5) releases air to the atmosphere in a quick manner, which air is available in the line up to the inlet port of the emergency brake valve on the towed vehicle, thereby ensuring that the towed vehicle travels further without any drifting.

At the instance of braking according to the braking system in the position of park brake system (hand brake), when the towing vehicle brakes using the park brake (hand brake), an actuation of the trailer park brake control valve (6) is interrupted, as shown in figure 5. Air available in the inlet of the trailer park brake control valve (6) is introduced through a normally opened port thereof into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) up to the normally closed port of the trailer park brake control valve (6) is released to the atmosphere through a quick exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

After braking, in case a hand brake of the towing vehicle is released, the trailer park brake control valve (6) is again actuated, as shown in figure 6. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet.

According to a hydraulic-hydraulic three-circuit trailer brake system, the air compressor (1) is connected to an inlet port of the air relief valve (2), as shown in figure 7. An outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). An air inlet port of the first type of the trailer control valve (5) is connected to an air outlet port of the air tank (3), and an air outlet port of the first type of the trailer control valve (5) is connected to an inlet port of the exhaust valve (7). Hydraulic pilot-actuated inlets of the first type of the trailer valve (5) are connected to the brake hubs of the towing vehicle. An inlet port of the trailer park brake control valve (6) is connected to an outlet port of the air tank (3) and a pilot-actuated inlet port of the valve (6) is connected to an outlet port of the air tank (3). A normally opened air outlet port of the valve (6) is connected to an inlet port of the exhaust valve (7), and a normally closed air outlet port thereof is connected to a pilot-actuated park brake inlet port of the trailer brake control valve (8). An air outlet port of the two-way quick exhaust valve (7) which is preferably used is connected to the pilot-actuated air inlet ports of the trailer brake control valve (8). A supply port of the trailer brake control valve (8) is connected to an outlet port of the air tank (3), an air outlet port of the trailer brake control valve (8) is connected to an air inlet port of the supply line (9), a service brake air outlet port of the trailer brake control valve (8) is connected to an air inlet port of the service brake line (10). A supply port of the control valve of the towed vehicle (12) is connected to an outlet port of the air tank (3), a pilot-actuated inlet port of the control valve of the towed vehicle (12) is connected to an outlet port of the exhaust valve (7), and an exhaust outlet port of the control valve of the towed vehicle (12) is connected to an inlet port of the single-circuit brake line (11).

According to the operation of the system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of the first type of the trailer control valve (5), the trailer park brake control valve (6) and the trailer brake control valve (8). Air in the inlet of the control valve of towed vehicle (12) is conditioned and directly transmitted to its outlet. It is conveyed to the single-circuit brake line (11) of the control valve of the towed vehicle (12).

According to the operation of the system in a driving position, the trailer park brake control valve (6) is actuated when the vehicle is started or moved, as shown in figure 8. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10). Air in the inlet of the control valve of towed vehicle (12) is conditioned and directly transmitted to its outlet. In the single-circuit brake line (11) of the control valve of the towed vehicle (12), there is always air in the driving position.

At the instance of braking according to the operation of the system in a braking position, when the towing vehicle brakes (only the right brake, only the left brake, only the front brake, only the rear brake or both simultaneously), a hydraulic pressure is transmitted from the brake hubs (17) to the first type of the trailer control valve (5), as shown in figure 9. The first type of the trailer control valve (5) processes air available in the inlet thereof according to the signal received and sends it to the outlet port. Air in the outlet port of the first type of the trailer control valve (5) is introduced into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time.

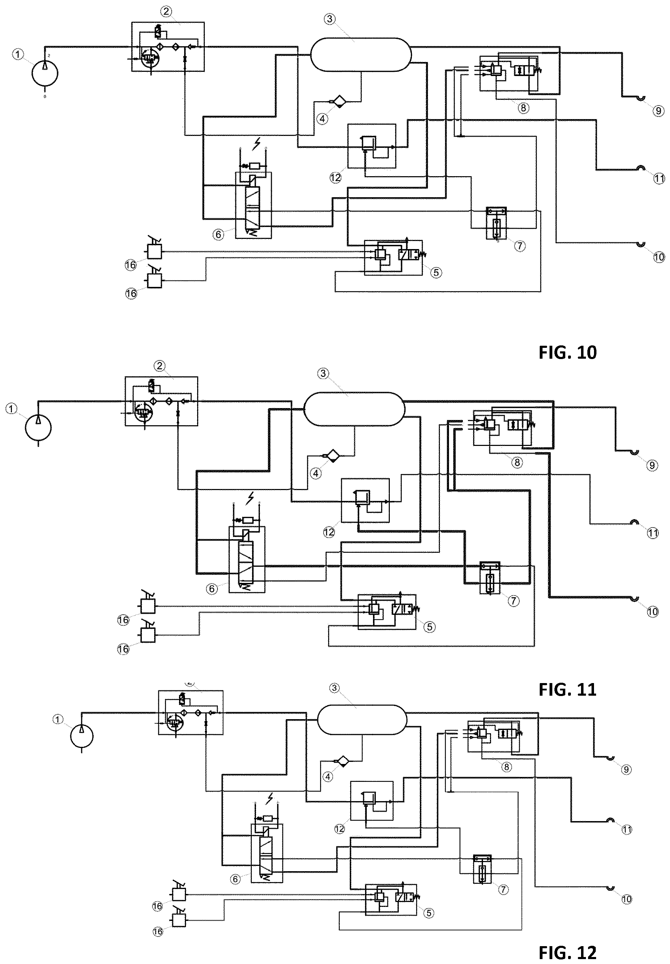

After the braking, as shown in figure 10, when a hydraulic pressure in the hydraulic brake hubs (17) of the towing vehicle is removed, the first type of the trailer control valve (5) modulates the outlet pressure with respect to the reduced warning pressure, and releases the residual air in the line up to the exhaust valve (7) to the atmosphere through the exhaust port. When the pressure in the inlet thereof is reduced, the exhaust valve (7) in turn releases the air to the atmosphere in a quick manner, which air is present in the outlet thereof and up to the inlet of the first type trailer control valve (5) and in the warning port of the control valve of the towed vehicle (12), thereby taking the brake system of trailer brake control valve (8) and the control valve of the towed vehicle (12) into a neutral position. The first type of the trailer control valve (5) releases air to the atmosphere in a quick manner, which air is available in the line up to the inlet port of the emergency brake valve on the towed vehicle, thereby ensuring that the towed vehicle travels further without any drifting. As soon as the braking is over, the control valve of the towed vehicle (12) sends air to the single-circuit brake line (11).

At the instance of braking in the position of park brake system (hand brake), when the towing vehicle brakes using the park brake (hand brake), an actuation of the trailer park brake control valve (6) is interrupted, as shown in figure 11. The air available in the inlet of the trailer park brake control valve (6) is introduced through a normally opened port into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) and up to the normally closed port of the trailer park brake control valve (6) is released to the atmosphere through a quick exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

After the braking, in case the park brake of the towing vehicle is released, the trailer park brake control valve (6) is actuated once again, as shown in figure 12. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet. As soon as the braking is over, the control valve of the towed vehicle (12) sends air to the single-circuit brake line (11).

According to a hydraulic-pneumatic actuated double-circuit trailer brake system, the air compressor (1) is connected to an inlet port of the air relief valve (2), as shown in figure 13. An outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). An air inlet port of the trailer park brake control valve (6) is connected to an outlet port of the air tank (3) and a pilot-actuated inlet port of the valve (6) is connected to an outlet port of the air tank (3). A normally opened air outlet port of the valve (6) is connected to an inlet port of the exhaust valve (7), and a normally closed air outlet port thereof is connected to a pilot-actuated park brake inlet port of the trailer brake control valve (8). An air outlet port of the exhaust valve (7) is connected to the pilot-actuated air inlet ports of the trailer brake control valve (8). A supply port of the trailer brake control valve (8) is connected to an outlet port of the air tank (3), a trailer supply air outlet port of the valve (8) is connected to an air inlet port of the supply line (9), a service brake air outlet port of the valve (8) is connected to an air inlet port of the service brake line (10). An air inlet port of the pneumatic warning valve (13) is connected to an outlet port of the air tank (3). An air inlet port of the second type of the trailer control valve (14) is connected to an outlet port of the air tank (3), a pneumatic pilot-actuated inlet port of the second type of the trailer control valve (14) is connected to an outlet port of the pneumatic brake warning valve (13), and a hydraulic inlet port of the second type of the trailer control valve (14) is connected to a brake hub of the towing vehicle. An air outlet port of the second type of the trailer control valve (14) is connected to the air inlet port of the exhaust valve (7).

According to the operation of the system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of second type of the trailer control valve (14), the pneumatic brake warning valve (13), the trailer park brake control valve (6) and the trailer brake control valve (8).

According to the operation of the system in a driving position, the trailer park brake control valve (6) is actuated when the vehicle is started or moved, as shown in figure 14. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10).

At the instance of braking according to the operation of the system in a braking position, when the towing vehicle brakes, a hydraulic pressure is transmitted from the hydraulic brake hub (17) to the second type of the trailer control valve (14), as shown in figure 15. At the same time, one (17) of the hydraulic brake hubs actuates the pneumatic brake warning valve (13). The pneumatic brake warning valve (13) transmits the warning received to the second type of the trailer control valve (14). The first type of the trailer control valve (14) processes air available in the inlet thereof according to the signal received and sends it to the outlet port. Air in the outlet port of the second type of the trailer control valve (14) is introduced into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time.

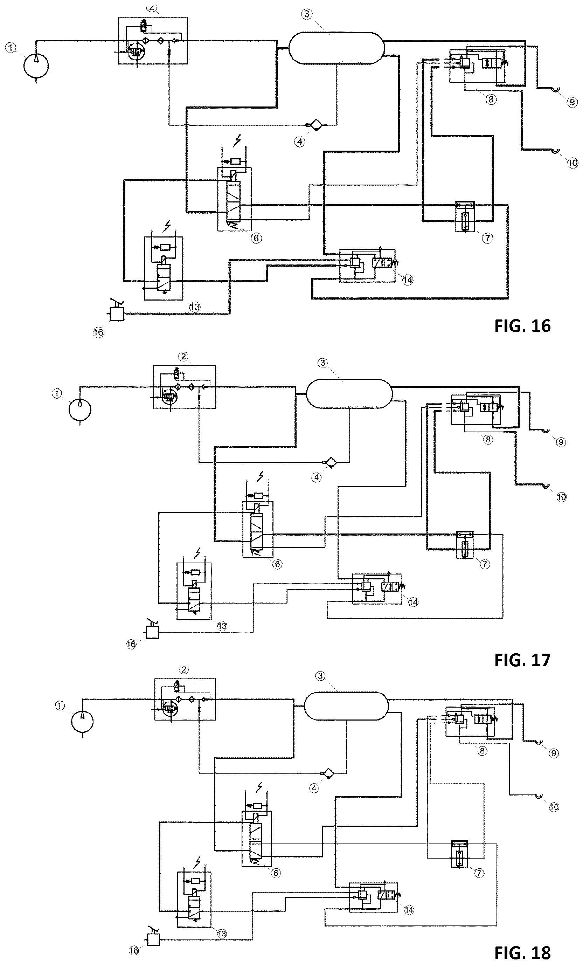

At the step of braking, when a hydraulic pressure in the hydraulic brake hubs of the towing vehicle is removed, the second type of the trailer control valve (14) modulates the outlet pressure in the reverse direction with respect to the reduced warning pressure, and releases the residual air in the line up to the exhaust valve (7) to the atmosphere through the exhaust port, as shown in figure 16. When a warning pressure in the inlet thereof is reduced, the exhaust valve releases air to the atmosphere in a quick manner, which air is available in the outlet thereof and up to the second type of the trailer control valve (14), in order to take the brake system of the trailer brake control valve (8) into a neutral position. The second type of the trailer control valve (14) releases air to the atmosphere in a quick manner, which air is available in the line up to the inlet port of the emergency brake valve on the towed vehicle, thereby ensuring that the towed vehicle travels further without any drifting.

At the instance of braking in the position of park brake system (hand brake), when the towing vehicle brakes using the park brake (hand brake), an actuation of the trailer park brake control valve (6) is interrupted, as shown in figure 17. The air available in the inlet of the trailer park brake control valve (6) is introduced through a normally opened port into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) and up to the normally closed port of the trailer park brake control valve (6) is released to the atmosphere through a quick exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

After the braking, in case the park brake of the towing vehicle is released, the trailer park brake control valve (6) is actuated once again, as shown in figure 18. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet.

According to a hydraulic-pneumatic three-circuit trailer brake system, the air compressor (1) is connected to an inlet port of the air relief valve (2), as shown in figure 19. An outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). An inlet port of the trailer park brake control valve (6) is connected to an outlet port of the air tank (3) and a pilot-actuated inlet port of the valve (6) is connected to an outlet port of the air tank (3). A normally opened air outlet port of the valve (6) is connected to an inlet port of the exhaust valve (7), and a normally closed air outlet port thereof is connected to a pilot-actuated park brake inlet port of the trailer brake control valve (8). An air outlet port of the exhaust valve (7) is connected to the pilot-actuated air inlet ports of the trailer brake control valve (8). A supply port of the trailer brake control valve (8) is connected to an outlet port of the air tank (3), a trailer supply air outlet port of the trailer brake control valve (8) is connected to an air inlet port of the supply line (9), a service brake air outlet port of the valve (8) is connected to an air inlet port of the service brake line (10). A supply port of the control valve of the towed vehicle (12) is connected to an outlet port of the air tank (3), a pilot-actuated inlet port of the control valve of the towed vehicle (12) is connected to an outlet port of the exhaust valve (7), an exhaust outlet port of the control valve of the towed vehicle (12) is connected to an inlet port of the single-circuit brake line (11). An air inlet port of the pneumatic warning valve (13) is connected to an outlet port of the air tank (3). An air inlet port of the second type of the trailer control valve (14) is connected to an outlet port of the air tank (3), a pneumatic pilot actuation inlet port of the second type of the trailer control valve (14) is connected to an outlet port of the pneumatic brake warning valve (13), and a hydraulic inlet port of the second type of the trailer control valve (14) is connected to a brake hub of the towing vehicle. An air outlet port of the second type of the trailer control valve (14) is connected to the air inlet port of the exhaust valve (7).

According to the operation of the hydraulic-pneumatic triple-circuit trailer brake system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of the second type of the trailer control valve (14), the trailer park brake control valve (6) and the trailer brake control valve (8). Air that is present in the inlet of the control valve of the towed vehicle (12) is conditioned and directly conveyed to its outlet. It is conveyed to the single-circuit brake line (11) of the control valve of the towed vehicle (12).

According to the operation of the system in a driving position, the trailer park brake control valve (6) is actuated when the vehicle is started or moved, as shown in figure 20. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10). Air in the inlet of the control valve of towed vehicle (12) is conditioned and directly transmitted to its outlet. In the single-circuit brake line (11) of the control valve of the towed vehicle (12), there is always air in the driving position.

At the instance of braking according to the operation of the system in a braking position, when the towing vehicle brakes, a hydraulic pressure is transmitted from the hydraulic brake hub (17) to the second type of the trailer control valve (14), as shown in figure 21. At the same time, one (17) of the hydraulic brake hubs actuates the pneumatic brake warning valve (13). The pneumatic brake warning valve (13) transmits the warning received to the second type of the trailer control valve (14). The first type of the trailer control valve (14) processes air available in the inlet thereof according to the signal received and sends it to the outlet port. Air in the outlet port of the second type of the trailer control valve (14) is introduced into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time.

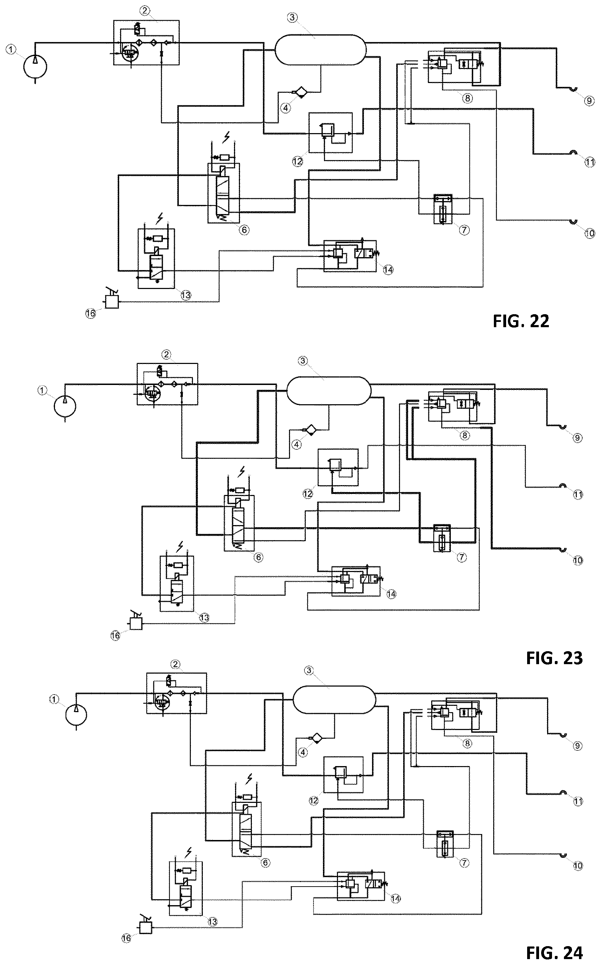

After the braking, when a hydraulic pressure in the hydraulic brake hubs of the towing vehicle is removed, the second type of the trailer control valve (14) modulates the outlet pressure in the reverse direction with respect to the reduced warning pressure, and releases the residual air in the line up to the exhaust valve (7) to the atmosphere through the exhaust port, as shown in figure 22. When the pressure in the inlet thereof is reduced, the exhaust valve (7) in turn releases air to the atmosphere in a quick manner, which air is present in the outlet thereof and up to the inlet of the second type of the trailer control valve (14) and in the warning port of the control valve of the towed vehicle (12), thereby taking the brake system of trailer brake control valve (8) and the control valve of the towed vehicle (12) into a neutral position. The second type of the trailer control valve (14) releases air to the atmosphere in a quick manner, which air is available in the line up to the inlet port of the emergency brake valve on the towed vehicle, thereby ensuring that the towed vehicle travels further without any drifting. As soon as the braking is over, the control valve of the towed vehicle (12) sends air to the single-circuit brake line (11).

At the instance of braking in the position of park brake system (hand brake): when the towing vehicle brakes using the park brake (hand brake), an actuation of the trailer park brake control valve (6) is interrupted, as shown in figure 23. The air available in the inlet of the trailer park brake control valve (6) is introduced through a normally opened port into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) and up to the normally closed port of the trailer park brake control valve (6) is released to the atmosphere through a quick exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

After the braking, in case the park brake of the towing vehicle is released, the trailer park brake control valve (6) is actuated once again, as shown in figure 24. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet. As soon as the braking is over, the control valve of the towed vehicle (12) sends air to the single-circuit brake line (11).

According to a mechanic-actuated double-circuit trailer brake system, the air compressor (1) is connected to an inlet port of the air relief valve (2), as shown in figure 25. An outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). The third type of the trailer control valve (15) is connected to a brake mechanism of the towing vehicle. An inlet port of the trailer park brake control valve (6) is connected to an outlet port of the air tank (3) and a pilot-actuated inlet port of the valve (6) is connected to an outlet port of the air tank (3). A normally opened air outlet port of the valve (6) is connected to an inlet port of the exhaust valve (7), and a normally closed air outlet port thereof is connected to a pilot-actuated park brake inlet port of the trailer brake control valve (8). An air outlet port of the exhaust valve (7) is connected to the pilot-actuated air inlet ports of the trailer brake control valve (8). A supply port of the trailer brake control valve (8) is connected to an outlet port of the air tank (3), a trailer supply air outlet port of the trailer brake control valve (8) is connected to an air inlet port of the supply line (9), a service brake air outlet port of the trailer brake control valve (8) is connected to an air inlet port of the service brake line (10). An air inlet port of the third type of the trailer control valve (15) is connected to an air outlet port of the air tank (3), and an air outlet port of the third type of the trailer control valve (15) is connected to an inlet port of the exhaust valve (7).

Based on the operation of the mechanical-actuated double-circuit trailer brake system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of third type of the trailer control valve (15), the trailer park brake control valve (6) and the trailer brake control valve (8).

In the driving position according to the mechanical-actuated double-circuit trailer brake system, the trailer park brake control valve (6) is actuated when the vehicle is started or moved, as shown in figure 26. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10).

Based on the operation of the system in a braking position, when the towing vehicle brakes, a mechanical warning from the brake mechanism is transmitted to the third type of the trailer control valve (15), as shown in figure 27. The third type of the trailer control valve (15) processes air available in the inlet thereof according to the signal received and sends it to the outlet port. Air in the outlet port of the third type of the trailer control valve (15) is introduced into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve (8) to the towing vehicle's line without a reduction in the pressure and flow rate, it transmits a warning in the towing vehicle to the towed vehicle in a very short reaction time.

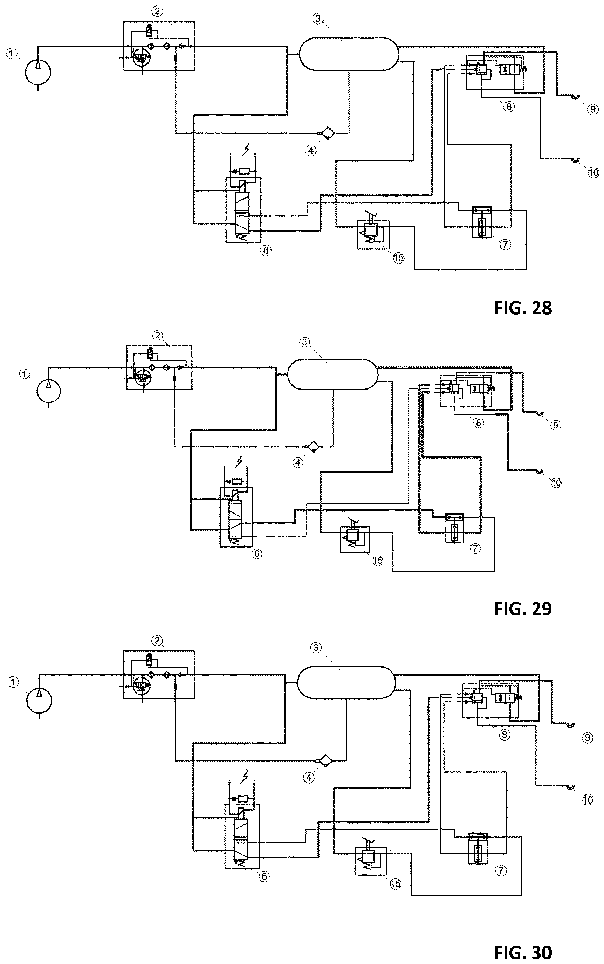

After the braking, when the mechanical warning in the brake mechanism of the towing vehicle is removed, the third type of the trailer control valve (15) modulates the outlet pressure in the reverse direction with respect to the reduced warning pressure, and releases the residual air in the line up to the exhaust valve (7) to the atmosphere through the exhaust port, as shown in figure 28. When the warning in the inlet thereof is reduced, the exhaust valve releases air to the atmosphere in a quick manner, which air is available in its outlet and up to the third type of the trailer control valve (15), in order to take the brake system of the trailer brake control valve (8) into a neutral position. The third type of the trailer control valve (15) in turn releases air to the atmosphere in a quick manner, which air is available in the line up to the inlet port of the emergency brake valve on the towed vehicle, thereby ensuring that the towed vehicle travels further without any drifting.

At the instance of braking in the position of park brake system (hand brake), when the towing vehicle brakes using the park brake (hand brake), an actuation of the trailer park brake control valve (6) is interrupted, as shown in figure 29. The air available in the inlet of the trailer park brake control valve (6) is introduced through a normally opened port into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) and up to the normally closed port of the trailer park brake control valve (6) is released to the atmosphere through a quick exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). If the towing vehicle is connected to the towed vehicle, the towed vehicle brakes accordingly. Since the system thus transmits air available in the inlet of the trailer brake control valve (8) to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

After the braking, in case the park brake of the towing vehicle is released, the trailer park brake control valve (6) is actuated once again, as shown in figure 30. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet.

In a mechanical-actuated three-circuit trailer brake system, the air compressor (1) is connected to an inlet port of the air relief valve (2), as shown in figure 31. An outlet port of the air relief valve (2) is connected to an inlet port of the air tank (3). A normally opened air outlet port of the air relief valve (2) is connected to a pilot-actuated port of the pilot-actuated liquid discharge valve (4). An inlet port of the pilot-actuated liquid discharge valve (4) is connected to a lower outlet port of the air tank (3). An inlet port of the trailer park brake control valve (6) is connected to an outlet port of the air tank (3), and a pilot-actuated inlet port of the valve (6) is connected to an outlet port of the air tank (3). A normally opened air outlet port of the valve (6) is connected to an inlet port of the exhaust valve (7), and a normally closed air outlet port thereof is connected to a pilot-actuated park brake inlet port of the trailer brake control valve (8). An air outlet port of the exhaust valve (7) is connected to the pilot-actuated air inlet ports of the trailer brake control valve (8). A supply port of the trailer brake control valve (8) is connected to an outlet port of the air tank (3), a trailer supply air outlet port of the trailer brake control valve (8) is connected to an air inlet port, a service brake air outlet port of the trailer brake control valve (8) is connected to an air inlet port of the service brake line (10). A supply port of the control valve of the towed vehicle (12) is connected to an outlet port of the air tank (3), a pilot-actuated inlet port of the control valve of the towed vehicle (12) is connected to an outlet port of the exhaust valve (7), an exhaust outlet port of the valve (12) is connected to an inlet port of the single-circuit brake line (11). An air inlet port of the third type of the trailer control valve (15) is connected to an air outlet port of the air tank (3), and an air outlet port of the third type of the trailer control valve (15) is connected to an inlet port of the exhaust valve (7).

According to the operation of the system, in a mechanical-actuated triple-circuit trailer brake system, a pressurized air generated by the air compressor (1) is passed through the air relief valve (2) and stored in the air tank (3). When the pressure stored in the air tank (3) reaches to a pressure value set for the system, the air relief valve (2) opens a compressor line to the atmosphere and prevents the compressor (1) from generating pressure. When the pressure in the main tank (3) reduces to a certain set value during the movement of the vehicle, it closes the compressor line opened to the atmosphere and opens the pressure line in order to allow the compressor (1) to replenish the air tank (3). The pilot-actuated liquid discharge valve (4) also releases water accumulated in the air tank to the atmosphere whenever the compressor (1) pressure line is opened to the atmosphere. Air stored in the air tank (3) is available in the inlet port of third type of the trailer control valve (15), the trailer park brake control valve (6) and the trailer brake control valve (8). Air in the inlet of the control valve of the towed vehicle (12) is conditioned and directly transmitted to its outlet. It is conveyed to the single-circuit brake line (11) of the towed vehicle's valve (12).

According to the operation of the system in a mechanical-actuated triple-circuit trailer brake system in a driving position, the trailer park brake control valve (6) is actuated when the vehicle is started or moved, as shown in figure 32. A normally closed port of the trailer park brake control valve (6) conveys air to the park brake port of the trailer brake control valve (8) in order to module the valve. An air flow is supplied from the air tank (3) to the inlet port of the trailer brake control valve (8). Air will be present in this line as long as air is present in the air tank (3) of the system when the vehicle is running or not running. An air flow is supplied from the trailer supply outlet port of the trailer brake control valve (8) to the supply line (9). Air is present in this line as long as there is air in the main air tank (3) of the system. When the vehicle is in a driving position, there is no pressure in the service brake line (10). Air in the inlet of the control valve of the towed vehicle (12) is conditioned and directly transmitted to its outlet. In the single-circuit brake line (11) of the control valve of the towed vehicle (12), there is always air in the driving position.

In a mechanical-actuated triple-circuit trailer brake system, an instance of braking of the system in a braking position is as follows. When the towing vehicle brakes, a mechanical warning from the brake mechanism is transmitted to the third type of the trailer control valve (15), as shown in figure 33. The third type of the trailer control valve (15) processes air available in the inlet thereof according to the signal received and sends it to the outlet port. Air in the outlet port of the third type of the trailer control valve (15) is introduced into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time.

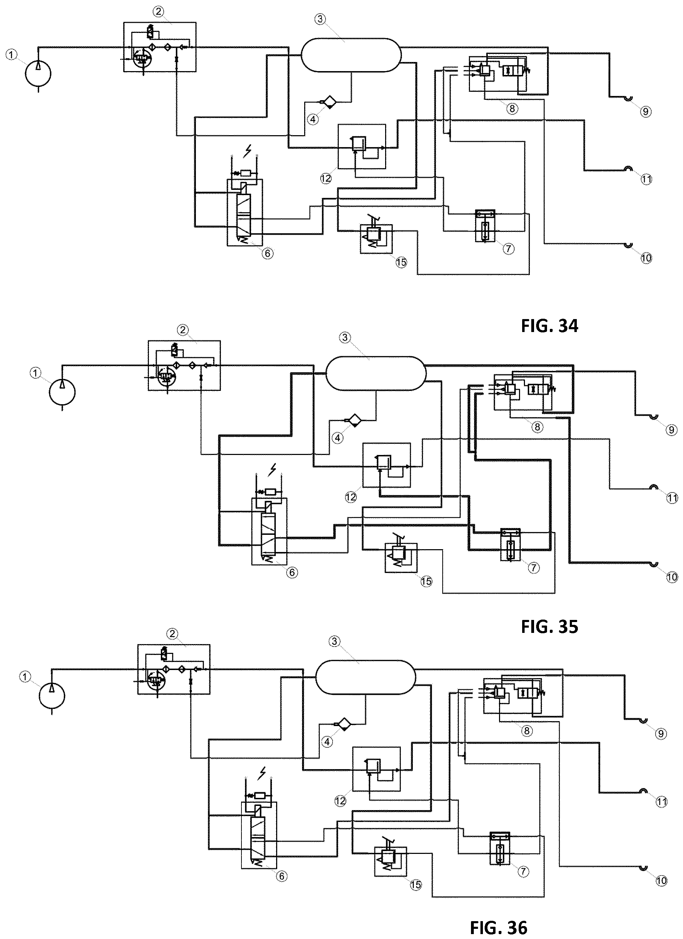

In a mechanical-actuated triple-circuit trailer brake system, a post-braking situation is as follows. When the mechanical warning in the brake mechanisms of the towing vehicle is removed, the third type of the trailer control valve (15) modulates the outlet pressure in the reverse direction with respect to the reduced warning pressure, and releases the residual air in the line up to the exhaust valve (7) to the atmosphere through the exhaust port, as shown in figure 34. When the pressure in the inlet thereof is reduced, the exhaust valve (7) in turn releases air to the atmosphere in a quick manner, which air is present in the outlet thereof and up to the inlet of the second type of the trailer control valve (15) and in the warning port of the control valve of the towed vehicle (12), thereby taking the brake system of trailer brake control valve (8) and the control valve of the towed vehicle (12) into a neutral position. The third type of the trailer control valve (15) in turn releases air to the atmosphere in a quick manner, which air is available in the line up to the inlet port of the emergency brake valve on the towed vehicle, thereby ensuring that the towed vehicle travels further without any drifting. As soon as the braking is over, the control valve of the towed vehicle (12) sends air to the single-circuit brake line (11).

In a mechanical-actuated triple-circuit trailer brake system, an instance of braking in the position of park brake system (hand brake) is as follows. When the towing vehicle brakes using the park brake (hand brake), an actuation of the trailer park brake control valve (6) is interrupted, as shown in figure 35. The air available in the inlet of the trailer park brake control valve (6) is introduced through a normally opened port into the inlet port of the exhaust valve (7). Air in the inlet of the exhaust valve (7) is diverted and guided into the outlet of the valve. Air in the outlets of the exhaust valve (7) is transmitted to the primary and secondary inlets of the trailer brake control valve (8). Air in the park brake inlet port of the trailer brake control valve (8) and up to the normally closed port of the trailer park brake control valve (6) is released to the atmosphere through an exhaust port on the trailer park brake control valve (6). Based on a warning received in the inlet thereof, the trailer brake control valve (8) processes air available in the inlet port and sends it to the service brake outlet line. Air in the trailer brake control valve (8) is transmitted to the service brake line (10). Air is transmitted to the pilot-actuated air inlet of the control valve of the towed vehicle (12) through the outlet of the exhaust valve (7). Depending on the air from the pilot-actuated air inlet, the control valve of the towed vehicle (12) reduces the air in the outlet thereof and thus reduces the air in the single-circuit brake line (11) in reverse direction. If the towing vehicle is connected to the towed vehicle, the towed vehicle brakes accordingly. Since the system thus transmits air available in the inlet of the trailer brake control valve to the trailer line without a reduction in the pressure and flow rate, it transmits a warning in the towing vehicle to the towed vehicle in a very short reaction time. With a pressurized air introduced into the primary and secondary inlets of the trailer brake control valve (8) and a discharge of air in the park brake inlet line, it brakes through two different channels.

In a mechanical-actuated triple-circuit trailer brake system, a post-braking situation is as follows. In case the park brake of the towing vehicle is released, the trailer park brake control valve (6) is actuated once again, as shown in figure 36. A normally closed port of the trailer park brake control valve (6) introduces air available in the inlet port of the valve into the park brake port of the trailer brake control valve (8) in order to module the valve. Simultaneous with the actuation of the trailer park brake control valve (6), a normally opened port thereof releases air that is present up to the inlet port of the exhaust valve (7) into the atmosphere through an exhaust outlet on the trailer park brake control valve (6). The exhaust valve (7) releases air that is present up to the primary and secondary inlet of the trailer brake control valve (8) into the atmosphere through the quick exhaust outlet. As soon as the braking is over, the control valve of the towed vehicle (12) sends air to the single-circuit brake line (11).

With the invention, a mechanic, hydraulic, pneumatic and electric signal is received from a hand brake of the towing vehicle in order to simultaneously operate a park brake system of the towed vehicle. In general, the brake system (20) of the invention may be used in 3 different types; 1. hydraulic-hydraulic actuated, 2. hydraulic-pneumatic actuated, and 3. mechanical-actuated. In a hydraulic-hydraulic actuated system, a first type of the trailer control valve (5) is used, in a hydraulic-pneumatic actuated system a second type of the trailer control valve is used, and in a mechanical-actuated system a third type of the trailer control valve (15) is used.

Thanks to a combination of the described components in the brake system (20) of the invention; at the time of braking, the time from pushing of the brake pedal of the towing vehicle to the point a pressure generated in the service brake line (10) reaches to 10% of its asymptotic value is higher than 0.2 seconds. Likewise, at the time of braking, the time from pushing of the brake pedal of the towing vehicle to the point a pressure generated in the service brake line (10) reaches to 75% of its asymptotic value is lower than 0.6 seconds. In the invention, in addition to the reduced time values, a brake system (20) with improved safety is provided, and at the time of braking, in case of any faults, i.e. a failure, leakage etc. in the service brake line, the air in the service line (9) of the towed vehicle is discharged so as to enable the towed vehicle to brake automatically.

In the invention, a reduction in the flow rate of air required for braking in the exhaust valve (7) is prevented by the trailer brake control valve (8). Furthermore, in the event of any leakage in the air supply line, it is prevented by means of the one-way check valve (16) that the pressure in the supply line of the trailer park brake control valve (6) and the trailer brake control valve (8) falls to zero.

In case the brake system (20) has three outlets, upon an actuation of the control valve of the towed vehicle (12) depending on the intensity of the warning received from the towing vehicle, the pressure of the single-circuit brake line (11) is reduced inversely proportional to the brake warning. In a hydraulic-actuated brake system (20), a hydraulic signal from the right/left or front/rear hydraulic brake hubs of the towing vehicle is received and converted into a pneumatic signal based on the intensity of the signal received.

In the hydraulic-pneumatic brake systems (20), a hydraulic signal from the left brake of the towing vehicle is generated by converting a hydraulic signal in the right brake line to a pneumatic signal, or a pneumatic or a hydraulic signal from the right brake of the towing vehicle is generated. Otherwise, it may be ensured that a hydraulic signal from the left brake is converted into a pneumatic signal and a pneumatic signal is converted into a pneumatic signal based on the intensity thereof. In a mechanical-actuated brake system, a mechanical motion is converted into a pneumatic signal during the braking of the towing vehicle, by being connected to the brake pedals of the towing vehicle. Likewise, during the braking of the left brake pedal, the right pedal is actuated simultaneously. In an embodiment of the invention, during the braking of the passive left or right brake pedal, a warning is provided to induce the active right or left brake so as to be activated simultaneously.

## Claims

1. A brake system (20) for simultaneously braking of a towed vehicle and a tower, comprising:
an air compressor (1) for vacuuming of air in the atmosphere;
an air relief valve (2) associated with the air compressor (1);
an air tank (3) for storing pressure and air;
a trailer control valve (6) for simultaneous braking of the towed vehicle and the tower during the braking by means of a signal received from a brake system of the towing vehicle;
a trailer brake control valve (8) for braking of the towed vehicle having a brake system, which valve is in communication with a plurality of connecting lines and
comprising at least one port; a supply line (9) for supplying an air flow from the trailer brake control valve (8); and a service brake line (10), **characterized in that** said brake system (20) further comprises;
a trailer brake control valve (8) for preventing a decrease in an air using for braking of the service brake line (10);
a first type of the trailer control valve (5), a second type of the trailer control valve (14) or a third type of the trailer control valve (15) in communication with the air tank (3) and connected to the brake mechanism of the towing vehicle; and
an exhaust valve (7) in communication with the first type of the trailer control valve (5), the second type of the trailer control valve (14) or the third type of the trailer control valve (15) and the trailer control valve (6), and **in that** said exhaust valve (7) is configured to correlate two warnings between them so as to provide them to the next receiver as a single output.

2. A brake system (20) according to claim 1, **characterized by** comprising a trailer brake control valve (8) which ensures automatic braking of the vehicle by discharging air in the supply line (9) of the towed vehicle in case of any failure or air leakage in the service brake line (10), which is in communication with the trailer supply outlet port through the service brake line (10) and is configured to provide an air flow to the supply line (9).

3. A brake system (20) according to claim 1 or 2, **characterized by** a liquid discharge valve (4) for discharging condensed water in the air tank (3).

4. A brake system (20) according to any one of the preceding claims, **characterized by** an one-way check valve (16) for preventing an air discharge between the trailer brake control valve (8) and the air tank (3) on the towing vehicle, in case of any leakage of the air supply line (9).

5. A brake system (20) according to any one of the preceding claims, **characterized by** a first type of the trailer control valve (5) configured to modulate the pressure of air available in the inlet thereof by receiving an hydraulic warning from the hydraulic main brake hubs (17) of the towing vehicle, and configured to send it to the outlet port before an actuation of the brake mechanism of the towing vehicle.

6. A brake system (20) according to claim 5, **characterized in that** said first type of the trailer control valve (5) comprises at least one hydraulic inlet, an air inlet port and air outlet port.

7. A brake system (20) according to any one of claims 1 to 3, **characterized by** comprising a second type of the trailer control valve (14) which receives an hydraulic warning from the hydraulic main brake hub of the towing vehicle and a pneumatic signal from the brake mechanism in order to adjust air pressure before an actuation of the brake mechanism of the towing vehicle and sends it to an outlet port.

8. A brake system (20) according to claim 7, **characterized in that** said second type of the trailer control valve (14) comprises an inlet port connected to the air tank (3), a hydraulic inlet port connected to the brake hub of the towing vehicle and an air outlet port to be connected to the exhaust valve (7).

9. A brake system (20) according to claim 7 or 8, **characterized by** comprising a second type of the trailer control valve (14) which modulates the outlet pressure in the reverse direction based on the reduced warning pressure, and releases the residual fluidic air in the line up to the exhaust valve (7) into the atmosphere via an exhaust port.

10. A brake system (20) according to any one of claims 1 to 3, **characterized by** the third type of the trailer control valve (15) configured to receive a mechanical warning from the brake mechanism of the towing vehicle, and configured to adjust the air pressure before an actuation of the brake mechanism of the towing vehicle and send it to the outlet port, and which has at least one air inlet port, one air outlet port and one exhaust port.

11. A brake system (20) according to claim 10, **characterized in that** the third type of the trailer control valve (15) comprises an outlet port which processes air based on the signal received and transmits it to the inlet port of the exhaust valve (7).

12. A brake system (20) according to any one of preceding claims, **characterized by** comprising a single-circuit brake line (11) in which the pressure is reduced inversely proportional to the brake warning, upon an actuation of the control valve of the towed vehicle (12) depending on the intensity of the warning received from the towing vehicle.

13. A brake system (20) according to any one of preceding claims, **characterized in that** said exhaust valve (7) is a two-way quick exhaust valve.

14. A brake system (20) according to any one of preceding claims, **characterized in that** a passive left or right brake pedal is configured to provide warning to induce the active right or left brake so as to be activated simultaneously, during the braking.
